# FASCICULE DE BREVET EUROPEEN

(11) **EP 2 018 258 B1**
(45) Date de publication et mention de la délivrance du brevet: **18.01.2017**
(21) Numéro de dépôt: 07735635.0
(22) Date de dépôt: 24.04.2007
(51) Int. Cl.: B29C 31/04, B29C 43/34

(54) **DISPOSITIF ET PROCEDE DE MOULAGE PAR COMPRESSION D'ARTICLES EN MATIERE PLASTIQUE**
VORRICHTUNG UND VERFAHREN ZUM PRESSFORMEN VON ARTIKELN AUS KUNSTSTOFF
DEVICE AND PROCESS FOR COMPRESSION MOULDING PLASTICS ARTICLES

(30) Priorité: 01.05.2006 EP 06113343; 13.06.2006 EP 06115409
(43) Date de publication de la demande: 28.01.2009
(73) Titulaire: Aisapack Holding SA, 1896 Vouvry (CH)
(72) Inventeur: HANOT, Dominique, CH-1896 Vouvry (CH)
(74) Mandataire: Grosfillier, Philippe
(86) Numéro de dépôt international: PCT/IB2007/051511
(87) Numéro de publication internationale: WO 2007/125480

(56) Documents cités:
- WO-A-96/09151
- DE-C1- 3 804 464
- US-A- 3 591 896

## Description

### Domaine de l'invention

La présente invention concerne un système et un procédé de moulage par compression d'articles en matière plastique, dans lequel la pièce est obtenue par la compression d'une portion de matière plastique à l'état fondu entre les deux parties d'un moule.

La présente invention s'applique plus particulièrement à la réalisation de tubes en matière plastique par ex. dentifrices ou cosmétiques, le tube étant formé d'un corps cylindrique souple lié à une tête comprenant une épaule et un orifice. Dans ce cas particulier, la tête du tube est formée et simultanément soudée au corps en une opération. La tête du tube est réalisée à partir d'une dose de matière fondue formée et comprimée entre un outillage inférieur appelé ensemble matrice et un outillage supérieur appelé mandrin sur lequel est emmanché le corps cylindrique souple. La température de la matière est telle qu'elle se soude au corps du tube. Dans une machine de production de tubes, plusieurs moules sont généralement animés d'un mouvement discontinu (ou continu), chaque moule subissant les différentes étapes du procédé (charge du corps de tube, dépose de la dose de matière plastique, compression moulage, refroidissement, démoulage et décharge du tube).

### Etat de la technique

Des dispositifs et des procédés de réalisation de tels tubes sont connus dans l'état de la technique.

A titre d'exemple, les brevets US 4 943 405, US 4 352 775 et la demande DE 103 49 837 décrivent des procédés et dispositifs dans lesquels la dose est déposée autour d'une tige formant l'orifice du tube, le contenu de ces publications étant incorporé par référence dans la présente demande pour ce qui concerne la description desdits procédés et dispositifs.

Plus particulièrement, dans le brevet US 4,943,405, et comme représenté dans la figure 1 de celui-ci, une dose de matière plastique sous forme annulaire est déposée depuis une alimentation sur la face supérieure d'une douille et autour de la tige qui sert à former l'orifice dans l'épaule. La sortie de l'alimentation est entourée par une buse annulaire qui permet la projection d'air sous pression pour séparer la dose déposée de l'alimentation, une fois que la quantité désirée a été déposée. Une fois la dose déposée sur la douille, l'on retire l'alimentation et l'on amène un mandrin qui a la forme de l'épaule à créer. La face frontale du mandrin entre en contact avec la face supérieure de la tige et l'ensemble douille-tige est repoussé à l'intérieur des matrices d'épaule et de filetage pour former la tête qui deviendra l'extrémité du tube. Les figures 3 et 4 de ce brevet illustrent cette étape de formation de la tête et de la soudure de celle-ci sur le corps du tube porté par le mandrin. L'orifice de la tête est formé par la tige qui se déplace longitudinalement dans la douille. Lors de cette étape de formation de la tête et déplacement du mandrin dans la matrice, la tige est repoussée axialement dans la douille par le mandrin d'une position haute à une position basse dans laquelle elle sert à former un orifice dans l'épaule en dépassant de la face supérieure de la douille.

Un problème rencontré dans le dispositif décrit dans ce brevet concerne le positionnement relatif de la tige dans la douille. Si elle est guidée et coulisse librement dans le sens axial, ce coulissement fait que l'on ne peut pas être sûr de sa position, en particulier de la position de sa face supérieure par rapport à la face supérieure de la douille. Toutefois, cette position est très importante puisque c'est par ce positionnement relatif que l'on forme l'orifice dans la tête. L'épaisseur de la matière autour de l'orifice joue un rôle puisque c'est elle qui détermine la position relative que doivent avoir la douille et la tige. Un positionnement incertain résulte dans des têtes mal-formées, notamment sans orifice.

Le brevet US 4,352,775 décrit un autre dispositif et procédé de production de tubes. Dans cette publication, une dose sous forme annulaire est déposée directement sur le fond de la matrice qui a la forme de la tête en entourant la tige qui formera l'orifice. La tige est maintenue en position haute par l'intermédiaire d'un ressort et est repoussée contre la force du ressort lors de l'introduction du mandrin dans la matrice pour former la tête. Ce dispositif ne comporte pas de douille servant de support intermédiaire pour la dose, ce qui réduit la précision du centrage du dépôt de dose dans le moule. Par ailleurs, l'absence de support intermédiaire a pour conséquence un refroidissement rapide des parties de la dose qui entrent immédiatement en contact avec les parois du moule. Ce gradient de température au sein de la dose peut occasionner une déformation des articles moulés.

La demande DE 103 49 837 décrit un autre dispositif et procédé pour la production de tubes avec une tige et une douille comparables à ceux décrits dans le brevet US 4,943,405 mentionné ci-dessus. Dans cette publication allemande, la tige peut se déplacer axialement en coulissant dans la douille et est montée sur un ressort pour la maintenir en position haute par rapport à la douille. Lorsque le mandrin est introduit dans la matrice pour former l'épaule, la tige est repoussée contre la force dudit ressort.

Le problème que l'on rencontre dans le brevet US 4,943,405 et la demande DE 103 49 837 est lié à un coulissement incontrôlé de la tige dans la douille, notamment pendant l'appui du mandrin contre la face avant de la tige et leur déplacement dans la matrice. Ce phénomène peut entraver la création d'un orifice dans l'objet à mouler (typiquement lorsque la tige est totalement rétractée dans la douille). Il peut également occasionner une répartition inhomogène ou inadéquate de la dose sur la douille.

Dans le cas particuliers de tubes présentant un orifice de petit diamètre, inférieur à 1.5 mm et par exemple 0.8 mm, les dispositifs décrits par les brevets US 4,943,405 et US 4,352,775 ne permettent pas de produire ces tubes de manière fiable. En effet dans cette configuration, la longueur en porte à faux et le petit diamètre de la tige d'orifice est telle qu'elle subit un flambage pouvant aller jusqu'à la rupture lorsque le mandrin entre en appui avec la face supérieure de celle-ci. Les ruptures des tiges d'orifice peuvent être fréquentes ce qui entraîne des arrêts répétés de la production, de plus les morceaux de tiges vont endommager d'autres pièces du moule lors de la fermeture de celui-ci.

Ainsi, l'un des buts principaux de l'invention est d'améliorer les procédés et dispositifs connus et en particulier de pouvoir produire de manière fiable des tubes avec des orifices de petits diamètres sans risque de casse des tiges d'orifice.

L'un des buts de l'invention est de proposer un système permettant une meilleure maîtrise de la position de la tige par rapport à la douille en particulier lors de la formation de l'épaule par le mandrin.

Un autre but de l'invention est de proposer un procédé de formation d'épaules de tubes qui est plus efficace que les procédés connus.

### Description générale de l'invention

L'invention concerne donc un dispositif de moulage d'un article en matière plastique selon la revendication 1.

Le déplacement de la tige, plus précisément ses positions extrêmes, est parfaitement contrôlé grâce au dispositif selon l'invention. Il est notamment possible de toujours maintenir la tige dans une position qui évite le bouchage de l'orifice de l'épaule lors de sa formation.

Ces avantages ne pouvaient être obtenues avec les dispositifs de l'état de la technique qui, soit ne comportaient pas des moyens de retenue en position haute et basse de la tige, soit comportaient des moyens de retenues élastiques (p.ex. ressorts) qui ne pouvaient garantir un positionnement relatif précis de la tige d'orifice par rapport à la douille.

### Description détaillée de l'invention

L'invention sera mieux comprise ci-dessous par la description d'un mode d'exécution de celle-ci et des figures qui s'y rapportent, dans lesquelles :
La figure 1 représente la partie inférieure du moule, ensemble matrice,
la figure 1A une variante du mode d'exécution de la figure 1,
la figure 1B une variante du mode d'exécution de la figure 1,
la figure 2 représente une buse de dosage ouverte formant une dose de matière plastique dans la partie inférieure du moule,
la figure 3 représente une buse de dosage fermée et dose en place dans la partie inférieure du moule,
la figure 4 correspond à la figure 3 mais avec tige d'orifice de petit diamètre,
la figure 5 correspond à la figure 3 mais avec tige d'orifice de grand diamètre,
la figure 6 représente le mandrin et l'ensemble matrice au début de la phase de compression et
la figure 7 représente la fin de la phase de compression.
la figure 8 illustre la façon dont la dose est déposée sur la douille.

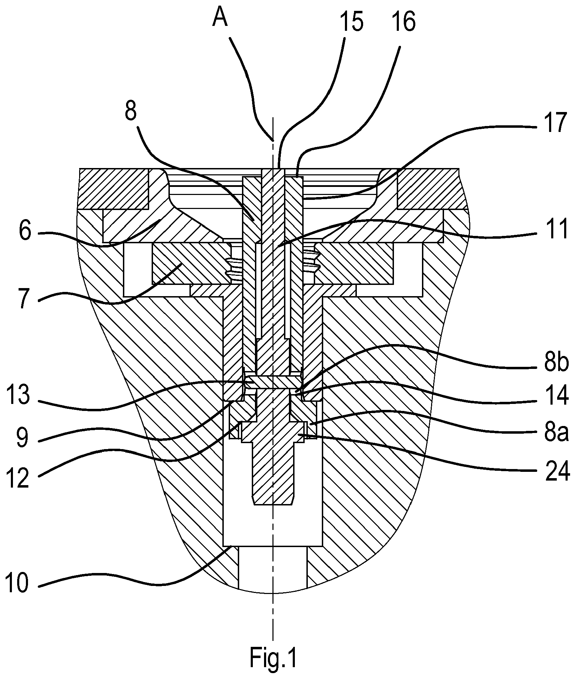

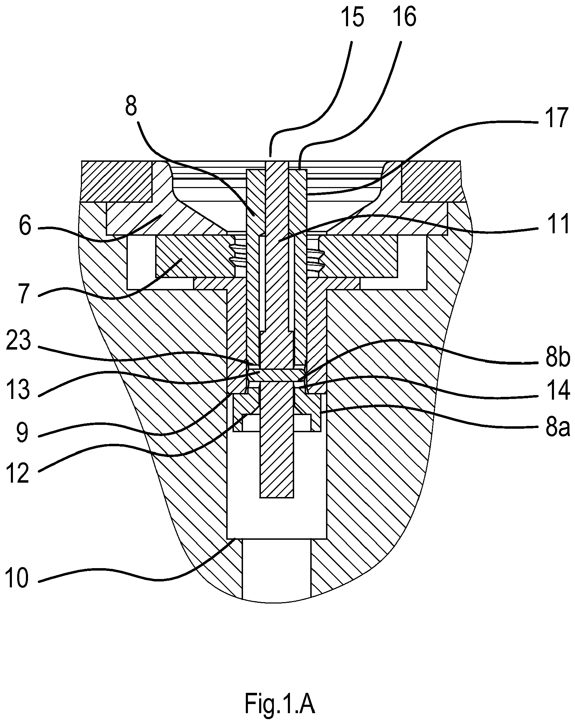

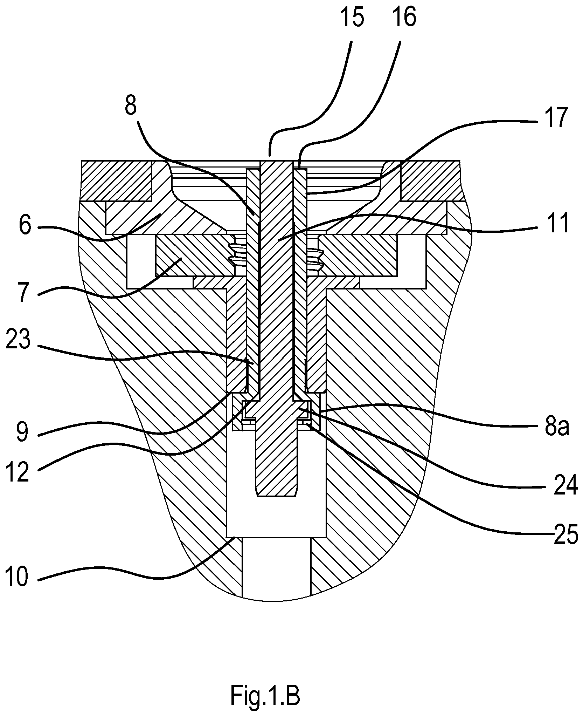

La figure 1 représente la partie inférieure du moule en position de repos, appelée ensemble matrice, comprenant une matrice d'épaule 6 qui va former la partie extérieure de la tête de tube, une matrice de filetage 7 en plusieurs parties pour permettre le démoulage du filetage et, dans l'axe de symétrie du dispositif, une douille **8** pouvant se déplacer en translation selon l'axe A. La douille **8** comporte un premier épaulement **8a** qui limite sa course entre deux butées **9** et **10**.

L'ensemble matrice comprend également une tige d'orifice **11** qui est utilisée pour former l'orifice de l'épaule. La tige d'orifice **11** comporte un épaulement **24** dans sa partie inférieure et peut coulisser dans la douille **8**. La course de la tige d'orifice **11** est limitée en position haute au moyen de l'épaulement **24** et d'une butée **12** disposée sur la douille. La course de la tige d'orifice **11** est également limitée en position basse par une goupille **13**, par exemple de forme cylindrique, et d'une butée **14** disposée sur la douille **8**, la butée **14** étant formée par la paroi inférieure d'un trou oblong **8b** dans ladite douille **8**. La goupille **13** est de préférence placée, par exemple chassée, perpendiculairement dans un trou dans la tige **11**. Cette goupille permet de bloquer de façon franche le déplacement relatif dans le sens axial de la tige **11** et de la douille **8**. Ce blocage a particulièrement de l'importance une fois que la dose de matière a été déposée et que le mandrin est en contact avec la face supérieure de la tige, pour former l'épaule. Dans les systèmes connus utilisant des ressorts, dans une telle position, la tige pouvait encore se déplacer, notamment sous l'effet de la matière qui est moulée par compression dans ce procédé et ainsi donner lieu à des défauts, comme par exemple un orifice bouché ou déformé ou à un orifice de diamètre équivalent au diamètre extérieur de la douille **8**.

La figure 1A présente une variante du dispositif de la figure 1 dans lequel l'épaulement **24** de la tige d'orifice **11** est supprimé et la butée haute **23** est réalisée par le contact de la goupille cylindrique **13** sur la paroi supérieure du trou oblong 8b. Cette variante présente l'avantage d'une grande simplicité de fabrication et de mise en oeuvre. En utilisant une seule goupille pour les deux butées **14**,**23** , on simplifie la construction du dispositif.

Une autre variante du dispositif est également réalisable sans la goupille **13** (voir figure 1B). Dans ce cas la course de la tige d'orifice **11** est limitée en position haute au moyen de l'épaulement **24** et d'une butée **12** disposée sur la douille. La course de la tige d'orifice **11** est limitée en position basse par une bague d'arrêt pour alésage (circlips) **25** monté dans une rainure de la partie inférieure de la douille **8**.

Les déplacements relatifs de la douille **8** et de la tige d'orifice **11** sont réalisés par un actionneur (non représenté) tel que ressort ou vérin pneumatique agissant sur la tige d'orifice **11**.

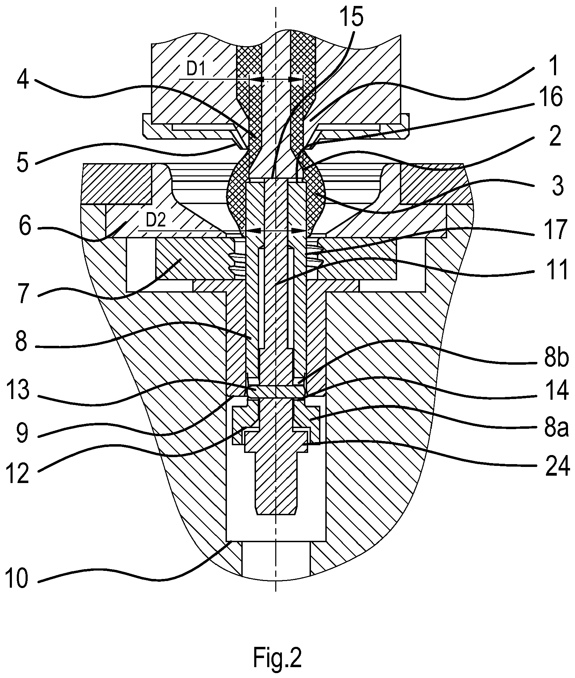

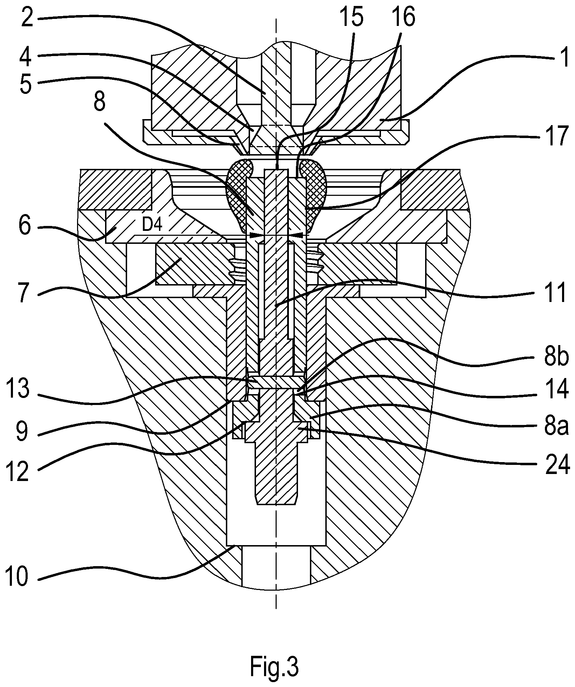

Dans les figures 2 et 3, on a représenté les étapes de dépose d'une dose de matière plastique fondue. Une buse de dosage **1**, positionnée au dessus de la matrice **6** et concentrique à la douille **8**, forme une dose **3** de matière plastique fondue. La buse de dosage **1** est alimentée par une extrudeuse (non illustrée) connue dans l'état de la technique.

Dans la figure 2, la soupape **2** effectue une course linéaire engendrée par un actionneur (non illustré) ce qui permet la formation d'une dose annulaire **3** à travers le passage **4** et sa dépose sur la face supérieure **16** et la périphérie **17** de la douille **8**.

Dans la figure 3, l'actionneur entraîne ensuite la soupape **2** en sens inverse ce qui provoque la fermeture de l'orifice de sortie **4**. La dose de matière plastique est coupée et décollée par soufflage d'un gaz au travers du passage **5**.

Pour que la dose de matière plastique **3** soit correctement déposée sur la douille **8** tel que l'illustre la figure 3, c'est-à-dire pour qu'elle soit en contact avec sa face supérieure **16** et sa périphérie **17**, il faut réunir plusieurs conditions:
- La distance entre la face supérieure **15** de la tige d'orifice **11** et la face supérieure **16** de la douille **8** doit être légèrement supérieure à l'épaisseur de paroi correspondante de la pièce moulée (tête de tube).
- La soupape **2** doit être très proche ou de préférence entrer en contact avec la surface **15** de la tige d'orifice **11**.
- Le diamètre de la soupape **2** est choisi en fonction du diamètre de la douille **8**.

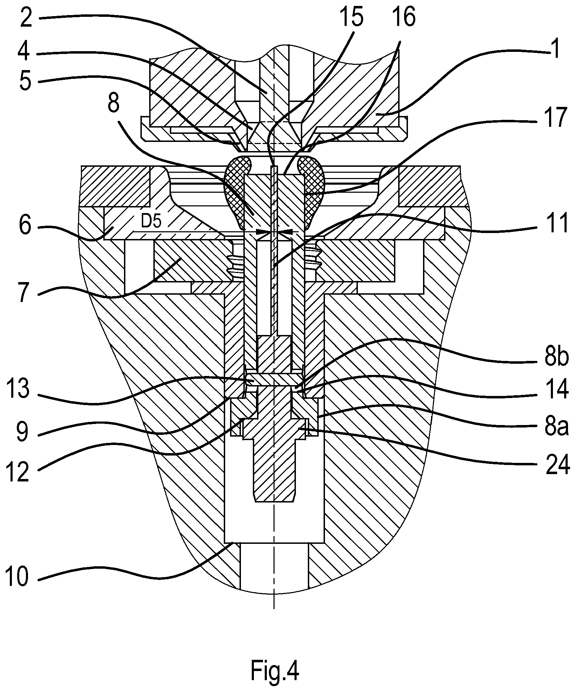

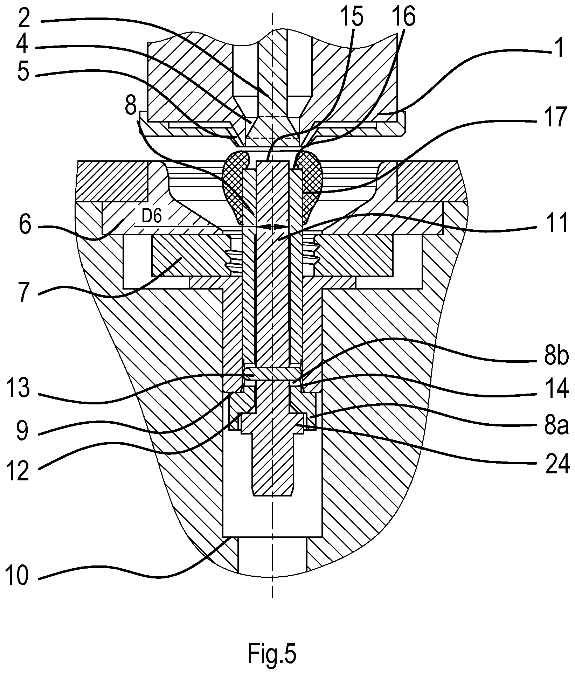

Dans le cas de cette invention, la dose est déposée sur la douille **8** (sur la face supérieure **16** et sur la périphérie **17**). Elle est donc bien centrée et ne va pas se déplacer lors des mouvements des outillages. Les défauts de moulage seront éliminés. D'autre part si pour un même diamètre de tube le diamètre de l'orifice varie on peut conserver le même diamètre de soupape de dosage car le diamètre de la douille **8** reste identique (voir Fig.4 petit orifice (D5), Fig.5 gros orifice (D6) ). Dans les usines de production de tubes cosmétiques, il est courant qu'une ligne produise un tube toujours de même diamètre mais avec des changements fréquents du diamètre de l'orifice. L'invention permet donc de gagner du temps dans les changements d'outillages car cela évite les changements de diamètre de la buse de dosage ainsi que les nouveaux réglages de celle-ci. D'autre part cela permet de réduire la plage de diamètres de buses de dosage nécessaire pour la production d'une gamme de diamètres de tubes. (p. ex. s'il fallait 6 buses différentes, le nouveau procédé ne nécessitera que 3 diamètres différents).

Dans le cas des tubes avec des petits orifices (voir figure 4), la longueur libre de la tige d'orifice **11** dépassant de la face supérieure de la douille **16** est très courte, typiquement d'une longueur sensiblement égale, voire légèrement supérieure, à la distance mandrin-douille lorsque le mandrin a atteint sa position inférieure, ce qui signifie que lorsque le mandrin **18** entre en contact avec la face supérieure **15** de la tige d'orifice **11**, celle-ci est sollicitée uniquement en compression et tout risque de flambage est écarté. Le dispositif permet donc de produire de manière fiable des tubes avec des orifices très petits.

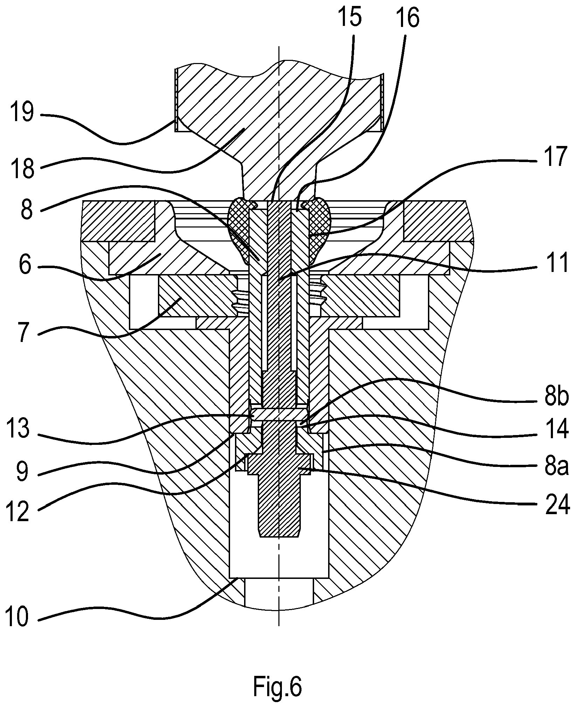

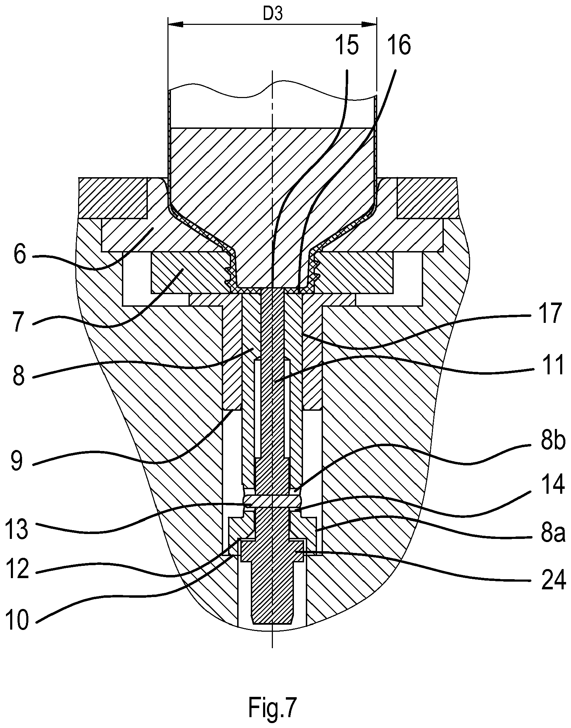

Dans l'étape suivante représentée à la figure 6, la partie inférieure du moule appelée ensemble matrice et comprenant la matrice **6** a quitté la buse de dosage **1** et un mandrin **18** est au-dessus et centré avec celle-ci. Le corps cylindrique du tube **19** est emmanché en position sur le mandrin **18**. Le mandrin **18** se déplace vers la matrice **6** et vient au contact de la tige d'orifice **11** sur sa face supérieure **15**. Il entraîne alors l'ensemble tige d'orifice **11** et la douille **8** jusqu'à ce que celle-ci vienne contre la butée **10** (voir la figure 7). Pendant ce déplacement, la goupille cylindrique **13** peut venir en contact avec la butée inférieure **14**, ce qui garantit que la face inférieure du mandrin **18** ne vienne jamais en contact avec la surface **16** de la douille **8**. A la fin du déplacement, l'épaulement **8a** de la douille **8** entre en contact avec la butée **10**. La face supérieure **15** de la tige d'orifice **11** est toujours restée en contact avec le mandrin **18** et la goupille **13** n'est pas en contact de la butée **14**. Cette configuration présente l'avantage de bien former l'orifice du tube autour de la tige d'orifice **11**. La dose de matière plastique **3** est déformée progressivement jusqu'à ce qu'elle remplisse la cavité formée par l'ensemble matrice et le mandrin **18** et vienne se souder à l'extrémité du corps de tube **19**. L'ensemble reste sous pression pendant la phase de refroidissement.

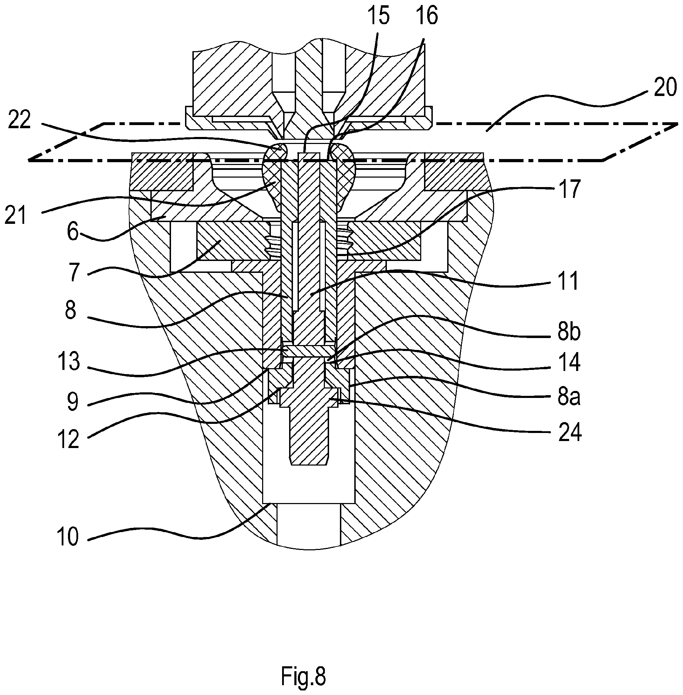

La figure 8 représente le même dispositif et la même configuration que le dispositif et la configuration illustrées sur la figure 3, elle diffère uniquement de cette dernière en ce que l'on illustre la façon dont la dose **3** est déposée sur la douille **8**.
La matière plastique constituant la dose **3** se trouve à la fois sur la face supérieure **16** et sur la paroi latérale **17** de la douille **8**.

La quantité de matière plastique disposée le long ou dans le prolongement de la paroi latérale **17** de la douille **8** est beaucoup plus importante que la quantité de matière plastique disposée au-dessus de la face supérieure **16** de la douille **8**. Cependant, la présence de matière plastique au-dessus de la face supérieure **16** de la douille **8** présente plusieurs avantages, notamment le fait de retenir efficacement la dose **3** dans une position déterminée. Le risque d'abaissement prématuré de la dose **3** le long de la douille **8** est donc éliminé. On relèvera ici que ce risque est présent dans le dispositif divulgué dans la demande de brevet allemand DE 103 49 837 car ici, l'intégralité de la dose se situe sur la paroi latérale de la douille.
De manière surprenante, on a constaté que la qualité des articles moulés était améliorée si l'on répartissait d'une certaine manière la matière plastique entre les zones qui se situent respectivement au-dessus et au-dessous d'un plan **20** coïncidant avec la face supérieure de la douille **8**. Plus précisément, la qualité des articles moulés est améliorée si la quantité de matière plastique **22** se trouvant au dessus du plan **20** représente entre 20 et 40 % de la masse totale de la dose **3** et si la quantité de matière plastique **21** se trouvant au-dessous du plan **20** représente respectivement entre 80 et 60 % de la masse totale de la dose **3**. De préférence, le rapport masse supérieure/masse inférieure se situe aux environs de 30/70.

Il va de soi que l'invention ne se limite pas aux exemples présentés ci-dessus.

## Revendications

1. Dispositif de moulage d'un article en matière plastique dans lequel l'article est obtenu par la compression d'une dose de matière plastique (3) à l'état fondu entre les deux parties d'un moule, comprenant au moins une alimentation de matière plastique (1), une tige (11) coulissant dans une douille (8) adaptée pour supporter temporairement ladite dose de matière plastique (3), un moule de tête d'article (6,7), un mandrin (18) coopérant avec ledit moule (6,7), **caractérisé par le fait qu'**il comprend des moyens de retenue non-élastiques (12-14,23,24,25) qui sont adaptés pour limiter le déplacement bidirectionnel de la tige (11) dans la douille (8), lesdits moyens de retenue non-élastiques comprenant des moyens de retenue en position haute (12,13,23,24) et des moyens de retenues en position basse (13,14,25).

2. Dispositif selon la revendication précédente **caractérisé par le fait que** la longueur maximale libre de la tige (11) dépassant la surface supérieure (16) de la douille (8) est sensiblement égale, voire légèrement supérieure, à la distance mandrin-douille lorsque le mandrin a atteint sa position inférieure.

3. Dispositif de moulage selon la revendication 1 ou 2 **caractérisé par le fait que** les moyens de retenue non-élastiques (12-14,23,25) font partie de la douille (8).

4. Dispositif selon la revendication précédente **caractérisé par le fait que** les moyens de retenue en position basse (13,14,25) sont constitués d'une butée (14,25) disposée sur la paroi inférieure d'un orifice latéral (8b) disposé sur la douille (8) et d'une protubérance latérale (13) disposée sur la tige (11), la protubérance latérale (13) étant montée coulissante dans l'orifice latéral (8b).

5. Dispositif selon la revendication précédente **caractérisé par le fait que** la protubérance latérale (13) est constituée d'une goupille qui traverse de part en part la tige (11).

6. Dispositif selon la revendication précédente **caractérisé par le fait que** les moyens de retenue en position haute sont constitués d'un épaulement (24) disposé sur la tige (11) et d'une butée (12) disposée vers l'extrémité inférieure de la douille (8).

7. Dispositif selon la revendication 5 **caractérisé par le fait que** les moyens de retenues en position haute sont constitués de ladite protubérance latérale (13) et d'une butée (23) disposée sur la paroi supérieure dudit orifice latéral (8b).

8. Dispositif selon l'une quelconque des revendications 4 à 7 dans lequel ladite butée est constituée d'un anneau (25) disposé dans une rainure formée dans ladite paroi inférieure.

9. Dispositif selon l'une quelconque des revendications précédentes **caractérisé par le fait qu'**en position basse, la tige (11) émerge de la face supérieure (16) de la douille (8) d'une distance inférieure à l'épaisseur de l'article à mouler.

10. Ensemble constitué d'un dispositif tel que défini dans une quelconque des revendications précédentes et d'une dose de matière plastique (3) disposée temporairement sur l'extrémité libre de la douille (8), **caractérisé par le fait que** la quantité de matière plastique (22) disposée au-dessus d'un plan (20) coïncidant avec la face supérieure de la douille (8) se situe entre 20% et 40% de la masse totale de la dose (3).

11. Procédé de moulage d'une dose de matière plastique (3) au moyen d'un dispositif tel que défini dans une quelconque des revendications précédentes **caractérisé par** le fait la dose (3) est déposée sur la face supérieure (16) et sur la paroi latérale (17) de la douille (8) de manière à ce que la quantité de matière plastique (22) disposée au-dessus d'un plan (20) coïncidant avec la face supérieure de la douille (8) se situe entre 20% et 40% de la masse totale de la dose (3).

## Patentansprüche

1. Vorrichtung zum Formen eines Artikels aus Kunststoff, wobei der Artikel durch das Pressen einer Menge an Kunststoff (3) im geschmolzenen Zustand zwischen den beiden Teilen eines Formwerkzeugs erhalten wird, die mindestens eine Kunststoffzufuhr (1), eine Stange (11), die in einer zum zeitweisen Halten der Menge an Kunststoff (3) ausgeführten Hülse (8) gleitet, ein Formwerkzeug für den Kopf des Artikels (6, 7), einen Formdorn (18), der mit dem Formwerkzeug (6, 7) zusammenwirkt, umfasst, **dadurch gekennzeichnet, dass** sie nicht elastische Haltemittel (12-14, 23, 24, 25) umfasst, die zum Beschränken der bidirektionalen Verschiebung der Stange (11) in der Hülse (8) ausgeführt sind, wobei die nicht elastischen Haltemittel Mittel (12, 13, 23, 24) zum Halten in der oberen Position und Mittel (13, 14, 25) zu Halten in der unteren Position umfassen.

2. Vorrichtung nach dem vorhergehenden Anspruch, **dadurch gekennzeichnet, dass** die maximale freie Länge der Stange (11), die über die obere Fläche (16) der Hülse (8) hinausgeht, im Wesentlichen gleich dem, sogar etwas größer als der, Abstand zwischen Formdorn und Hülse ist, wenn der Formdorn seine untere Position erreicht hat.

3. Formvorrichtung nach Anspruch 1 oder 2, **dadurch gekennzeichnet, dass** die nicht elastischen Haltemittel (12-14, 23, 25) Teil der Hülse (8) sind.

4. Vorrichtung nach dem vorhergehenden Anspruch, **dadurch gekennzeichnet, dass** die Mittel (13, 14, 25) zum Halten in der unteren Position aus einem Anschlag (14, 25), der an der unteren Wand einer lateralen Öffnung (8b) angeordnet ist, die auf der Hülse (8) angeordnet ist, und einem lateralen Vorsprung (13), der auf der Stange (11) angeordnet ist, gebildet sind, wobei der laterale Vorsprung (13) verschiebbar in der lateralen Öffnung (8b) befestigt ist.

5. Vorrichtung nach dem vorhergehenden Anspruch, **dadurch gekennzeichnet, dass** der laterale Vorsprung (13) durch einen Stift gebildet wird, der durch die Stange (11) von einer Seite zur anderen Seite hindurchführt.

6. Vorrichtung nach dem vorhergehenden Anspruch, **dadurch gekennzeichnet, dass** die Mittel zum Halten in der oberen Position aus einer Schulter (24), die auf der Stange (11) angeordnet ist, und einem Anschlag (12), der zum unteren Ende der Hülse (8) hin angeordnet ist, gebildet sind.

7. Vorrichtung nach Anspruch 5, **dadurch gekennzeichnet, dass** die Mittel zum Halten in der oberen Position aus dem lateralen Vorsprung (13) und einem Anschlag (23), der an der oberen Wand der lateralen Öffnung (8b) angeordnet ist, gebildet sind.

8. Vorrichtung nach einem der Ansprüche 4-7, wobei der Anschlag aus einem Ring (25) gebildet ist, der in einer in der unteren Wand ausgebildeten Nut angeordnet ist.

9. Vorrichtung nach einem der vorhergehenden Ansprüche, **dadurch gekennzeichnet, dass** die Stange (11) in der unteren Position aus der oberen Seite (16) der Hülse (8) in einem Abstand hervortritt, der unter der Dicke des zu formenden Artikels liegt.

10. Anordnung, die aus einer Vorrichtung gemäß der Definition in einem der vorhergehenden Ansprüche und einer zeitweise auf dem freien Ende der Hülse (8) angeordneten Menge an Kunststoff (3) gebildet wird, **dadurch gekennzeichnet, dass** die Menge an Kunststoff (22), die über einer mit der oberen Seite der Hülse (8) zusammenfallenden Ebene (20) angeordnet ist, zwischen 20 % und 40 % der Gesamtmasse der Menge (3) beträgt.

11. Verfahren zum Formen einer Menge an Kunststoff (3) mit einer Vorrichtung gemäß der Definition in einem der vorhergehenden Ansprüche, **dadurch gekennzeichnet, dass** die Menge (3) derart auf der oberen Seite (16) und auf der lateralen Wand (17) der Hülse (8) aufgebracht wird, dass die Menge an Kunststoff (22), die über einer mit der oberen Seite der Hülse (8) zusammenfallenden Ebene (20) angeordnet ist, zwischen 20 % und 40 % der Gesamtmasse der Menge (3) beträgt.

## Claims

1. Device for moulding a plastic article in which the article is obtained by the compression of a quantity of plastic material (3) in the molten state between the two parts of a mould, comprising at least one supply of plastic material (1), a rod (11), sliding in a sleeve (8) suitable for temporarily supporting said quantity of plastic material (3), a mould for the head of the article (6, 7) and a mandrel (18) cooperating with said mould (6, 7), **characterized in that** it comprises non-elastic retaining means (12-14, 23, 24, 25) which are suitable for limiting the bidirectional displacement of the rod (11) in the sleeve (8), said non-elastic retaining means comprising means for retaining in the upper position (12, 13, 23, 24) and means for retaining in the lower position (13, 14, 25).

2. Device according to the preceding claim, **characterized in that** the maximum free length of the rod (11) protruding beyond the upper face (16) of the sleeve (8) is substantially equal to, even slightly greater than, the mandrel-sleeve distance when the mandrel has reached its lower position.

3. Moulding device according to Claim 1 or 2, **characterized in that** the non-elastic retaining means (12-14, 23, 25) form part of the sleeve (8) .

4. Device according to the preceding claim, **characterized in that** the means for retaining in the lower position (13, 14, 25) are formed by a stop (14, 25) arranged on the lower wall of a lateral orifice (8b) arranged on the sleeve (8) and a lateral protuberance (13) arranged on the rod (11), the lateral protuberance (13) being slidably mounted in the lateral orifice (8b).

5. Device according to the preceding claim, **characterized in that** the lateral protuberance (13) is formed by a pin which passes through the rod (11) from end to end.

6. Device according to the preceding claim, **characterized in that** the means for retaining in the upper position consist of a shoulder (24) arranged on the rod (11) and a stop (12) arranged towards the lower end of the sleeve (8) .

7. Device according to Claim 5, **characterized in that** the means for retaining in the upper position consist of said lateral protuberance (13) and a stop (23) arranged on the upper wall of said lateral orifice (8b).

8. Device according to any one of Claims 4 to 7, in which said stop consists of a ring (25) arranged in a groove formed in said lower wall.

9. Device according to any one of the preceding claims, **characterized in that** in the lower position, the rod (11) emerges from the upper face (16) of the sleeve (8) at a distance which is less than the thickness of the article to be moulded.

10. Assembly consisting of a device as defined in any one of the preceding claims, and a quantity of plastic material (3) arranged temporarily on the free end of the sleeve (8), **characterized in that** the quantity of plastic material (22) arranged above a plane (20) coinciding with the upper face of the sleeve (8) is between 20% and 40% of the total mass of the quantity of material (3).

11. Method for moulding a quantity of plastic material (3) by means of a device as defined in any one of the preceding claims, **characterized in that** the quantity of material (3) is deposited on the upper face (16) and on the lateral wall (17) of the sleeve (8) so that the quantity of plastic material (22) arranged above a plane (20) coinciding with the upper face of the sleeve (8) is between 20% and 40% of the total mass of the quantity of material (3).
